# EUROPÄISCHE PATENTSCHRIFT

(11) **EP 4 368 415 B1**
(45) Veröffentlichungstag und Bekanntmachung des Hinweises auf die Patenterteilung: **10.09.2025**
(21) Anmeldenummer: 23206084.8
(22) Anmeldetag: 26.10.2023
(51) Int. Cl.: B60C 11/04, B60C 11/13

(54) **FAHRZEUGREIFEN**
VEHICLE TYRE
BANDAGE PNEUMATIQUE POUR VÉHICULES

(30) Priorität: 08.11.2022 DE 102022211763
(43) Veröffentlichungstag der Anmeldung: 15.05.2024
(73) Patentinhaber: Continental Reifen Deutschland GmbH, 30175 Hannover (DE)
(72) Erfinder: Lutz, André, 30165 Hannover (DE); Kristen, Florian, 30165 Hannover (DE)
(74) Vertreter: Continental Corporation

(56) Entgegenhaltungen:
- DE-A1- 102017 219 532
- DE-A1- 4 410 999
- JP-A- 2021 130 383
- JP-A- S6 325 107
- KR-A- 20200 121 049
- KR-B1- 102 088 907
- US-A- 4 345 632
- US-A1- 2020 156 415

## Beschreibung

Die Erfindung betrifft einen Fahrzeugreifen mit einem Profil, umfassend eine Basisfläche und eine gegenüber der Basisfläche um eine Rillentiefe zurückversetzte Profilrille mit zwei Rillenflanken und einem sich zwischen den Rillenflanken erstreckenden Rillengrund. Wenigstens ein Vorsprung erstreckt sich von einer auf dem Rillengrund gelegenen Grundkontur ausgehend um eine Vorsprungshöhe bis zu einer Abschlussfläche, wobei die Vorsprungshöhe kleiner ist als die Rillentiefe, wobei die Grundkontur schmaler ist als der Rillengrund und wobei die Abschlussfläche im Wesentlichen parallel zu der Basisfläche verläuft.

Vorsprünge am Rillengrund eines Fahrzeugreifens können verhindern, dass sich Steine in den Rillen festsetzen, somit die Funktion des Negativvolumens der Rille beeinträchtigen und den Fahrzeugreifen beschädigen. In DE 10 2017 219 532 A1 werden an einem Rillengrund angeordnete Grundanhebungen beschrieben, bei denen eine Deckfläche zu den Flächenrändern hin abfällt, wodurch die Wirksamkeit der Grundanhebungen als Steinauswerfer verbessert werden kann. US 2020/156415 A1 beschreibt einen Fahrzeugluftreifen, umfassend eine Rille mit einem Rillengrund, wobei eine Anhebung auf dem Rillengrund angeordnet ist, wobei die Anhebung einen Hauptkörper und einen eine spezielle Geometrie aufweisenden Endabschnitt umfasst.

Bei heruntergefahrenem Profil können als Steinauswerfer fungierende Vorsprünge am Rillengrund in Kontakt mit einem Fahrbahnuntergrund treten. Die aus dem Stand der Technik bekannten Vorsprünge bieten dabei wenig zusätzlichen Grip, insbesondere wenig Vorteile im Nasshandling. Sind die Vorsprünge hingegen so ausgelegt, dass sie kraft einer kantigen Form zusätzlichen Grip erzeugen können, erhöht sich, ebenfalls aufgrund der kantigen Form, eine Rissanfälligkeit am Rillengrund.

Der Erfindung liegt die Aufgabe zugrunde, einen Fahrzeugreifen bereitzustellen, der sich bei nach einer Abnutzung des Profils niedriger Profiltiefe durch zusätzlichen Grip und verbessertes Nasshandling auszeichnet, ohne dabei eine Rissanfälligkeit am Rillengrund zu erhöhen.

Die gestellte Aufgabe wird erfindungsgemäß durch einen Fahrzeugreifen gemäß Anspruch 1 gelöst.

Gemäß der Erfindung werden durch die mehreckige Abschlussfläche zusätzliche Kanten geschaffen, die den mit dem Fahrzeugreifen zu erzielenden Grip und das Nasshandling verbessern können. Auf der anderen Seite werden durch die von der Abschlussfläche kommende Aufweitung des Innenwinkels in Richtung der Grundkontur Spannungsspitzen am Rillengrund verringert, wodurch sich wiederum die Rissanfälligkeit am Rillengrund des Fahrzeugreifens reduziert.

Sofern die Richtungsbezeichnungen axial, in Axialrichtung, radial, in Radialrichtung und in Umfangsrichtung verwendet werden, beziehen sich diese auf den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 360° Umdrehung des Fahrzeugreifens früher einen minimalen Abstand zum Fahrbahnuntergrund als eine in Umfangsrichtung hintere Position, wobei die in Umfangsrichtung hinteren Position weniger als 180° hinter der vorderen Position ihren minimalen Abstand zum Fahrbahnuntergrund durchläuft. Die Axialrichtung bezieht sich auf eine Richtung parallel zur Drehachse. Axial nach innen zeigend bezieht sich dabei auf eine Orientierung, die einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Fahrzeugreifens verlaufen. Die Basisfläche fällt zusammen mit jener glatten Oberfläche, welche der Fahrzeugreifen aufweisen würde, wenn keinerlei kleinskalige Profilelemente, wie etwa Rillen oder Schneekanten vorgesehen wären. Kleinskalige Profilelemente sind wenigstens in einer der drei Dimensionen Radialrichtung, Axialrichtung und Umfangsrichtung durch eine Abmessung und/oder durch einen Krümmungsradius gekennzeichnet, der kleiner oder gleich einer maximalen Profiltiefe in dem Fahrzeugreifen ist. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein. Dort, wo beispielweise eine Rille durch einen Laufstreifen des Fahrzeugreifens verläuft, verläuft die Basisfläche als imaginäre Fläche oberhalb der Rille weiter; dort wo beispielsweise eine Schneekante auf dem Laufstreifen angeordnet ist, verläuft die Basisfläche als imaginäre Fläche unter der Schneekante weiter.

Erfindungsgemäß weist die Grundkontur eine gerundete Form ohne Innenwinkel auf.

Die mit den Merkmalen des Hauptanspruchs erzielten Effekte werden durch bevorzugte Ausführungsformen und Ausgestaltungen unterstützt und weiter verstärkt.

Die Profilrille in dem Profil des Fahrzeugreifens kann einen typischen Aufbau haben. Die Profilrille kann eine Umfangsrille, eine Schrägrille, eine Querrille oder eine komplexe Rille sein, wobei eine komplexe Rille beispielsweise in einem Verbindungsabschnitt zwischen zwei oder mehr Rillen vorliegen kann. Insbesondere können die Rillenflanken senkrecht zu der Basisfläche oder beispielsweise in einem Winkel zwischen 70° und 90° zu der Basisfläche verlaufen. Der Rillengrund kann im Wesentlichen flach sein oder im Querschnitt beispielweise eine U-förmige Wölbung aufweisen. Die Rillentiefe wird senkrecht zu der sich imaginär über der Profilrille erstreckenden Basisfläche zwischen der Basisfläche und einem unter dem Vorsprung gelegenen tiefsten Punkt am Rillengrund der Profilrille gemessen. Bei einem über die Rillenerstreckung gleichbleibenden Rillenquerschnitt kann die gleiche Rillentiefe an einer in Richtung der Rillenerstreckung neben dem Vorsprung gelegenen Stelle gemessen werden. Die Vorsprungshöhe wird senkrecht zu der Basisfläche zwischen dem unter dem Vorsprung gelegenen tiefsten Punkt am Rillengrund der Profilrille und der Abschlussfläche gemessen.

Die Abschlussfläche kann konzentrisch zu der Basisfläche verlaufen, wenn die Basisfläche im Bereich des Vorsprungs gekrümmt verläuft, wie beispielsweise im Bereich der Reifenschulter aber auch im Rahmen einer Umfangskrümmung. Die Abschlussfläche kann eben sein und eine zu einer gekrümmten Basisfläche konzentrische Krümmung approximieren. In beiden genannten Fällen verläuft die Abschlussfläche im Wesentlichen parallel zu der Basisfläche.

Eine Geodäte zwischen dem ersten abschlussflächenseitigen Innenwinkel und der Grundkontur des Vorsprungs ist die kürzeste auf einer Oberfläche des Vorsprungs verlaufende Verbindung zwischen dem Berührungspunkt zweier Seiten der Abschlussfläche in dem ersten abschlussseitigen Innenwinkel und der Grundkontur.

Ein Aufweiten des Innenwinkels entlang der Geodäte kann beispielsweise anhand von Schnitten durch den Vorsprung in parallel zu der Basisfläche verlaufenden Schnittebenen an verschiedenen Positionen entlang der Höhestreckung des Vorsprungs gemessen werden. Ein Aufweiten des ersten abschlussflächenseitigen Innenwinkels kann gegeben sein, wenn ein an einem Schnittpunkt mit der Geodäte gemessener Innenwinkel in einer Schnittebene größer ist als der erste abschlussflächenseitige Innenwinkel in der Abschlussfläche. Weitere Merkmale eines sich aufweitenden abschlussflächenseitigen Innenwinkels können sein, dass ein Innenwinkel an einem Schnittpunkt mit der Geodäte in einer radial weiter außen gelegenen Schnittebene größer ist als in einer radial weiter innen gelegenen Schnittebene. In einer Ausführungsform der Erfindung wächst der Innenwinkel als Funktion einer Pfadlänge entlang der Geodäte von der Abschlussfläche in Richtung der Grundkontur monoton, vorzugsweise stetig und ist weiter vorzugsweise im Rahmen der genannten Funktion stetig differenzierbar.

Unter Winkeln, Kanten und Ecken sind keine mathematisch exakten Konstrukte zu verstehen, sondern die im Rahmen einer üblichen Fertigungsgenauigkeit eines Fahrzeugreifens zu erreichenden entsprechenden Profilmerkmale. Beispielsweise kann ein Übergang zwischen zwei Flächen unterschiedlicher Orientierung mit einem Verrundungsradius von 1 mm noch als Kante und der Übergang noch als gewinkelt angesehen werden.

Besonders bevorzugt ist eine Ausführung, gemäß der ein Flächeninhalt der Abschlussfläche wenigstens 30%, vorzugsweise wenigstens 50%, weiter vorzugsweise wenigstens 70% eines von der Grundkontur eingeschlossenen Flächeninhalts beträgt. Durch eine ausreichend große Abschlussfläche kann bei abgefahrenem Profil eine entsprechend große Kontaktfläche des Vorsprungs zu einem Fahrbahnuntergrund bereitgestellt werden. Weiterhin kann bei einem von der Grundkontur zu der Abschlussfläche hin nicht zu stark verjüngenden Vorsprung eine durchgehende strukturelle Integrität gewährleistet werden, die geeignet ist, Kräfte aus einem Kontakt mit dem Fahrbahnuntergrund aufzunehmen.

Die Vorsprungshöhe kann zwischen 5% und 50%, vorzugsweise zwischen 10% und 30% der Profiltiefe betragen. Die Vorsprungshöhe kann dementsprechend in einem typischen Profil beispielsweise zwischen 3 mm bis 5 mm betragen. Hierdurch wird eine gute Funktion des Profils unter verschiedenen Abnutzungsgraden des Fahrzeugreifens erreicht.

Die Grundkontur des Vorsprungs kann sich über 20% bis 80%, vorzugsweise über 40% bis 70% einer Breite des Rillengrundes erstrecken. Bei einem flachen Rillengrund ist die Breite des Rillengrundes als kürzeste Erststreckung auf dem flachen Rillengrund zwischen zwei angrenzenden Rillenflanken definiert. Bei einem im Querschnitt U-förmigen Rillengrund kann die Breite des Rillengrundes als kürzeste Entfernung zwischen zwei angrenzenden Rillenflanken gemessen werden, wo ein geradliniger Verlauf der Rillenflanken in den gekrümmten Verlauf der U-Form des Rillengrundes übergeht. Durch die beschriebene Wahl der Breite des Vorsprungs am Rillengrund kann ein guter Kompromiss zwischen der Funktion der Rille beim Ausleiten von Wasser auf der einen Seite und der Funktion des Vorsprungs als Steinauswerfer und Mittel zur Verbesserung des Grips bei heruntergefahrenem Profil auf der anderen Seite gefunden werden.

Der Übergang des Vorsprungs zum Rillengrund kann mit einem geeigneten Radius verrundet sein, um die Rissanfälligkeit zu verringern. Hierzu kann ein Verrundungsradius von 1 mm bis 3 mm vorteilhaft sein. Die Grundkontur des Vorsprungs ist dann definiert als imaginäre Kontur des Vorsprungs am Rillengrund in gedachter Abwesenheit der Verrundung.

Vorzugsweise ist der erste abschlussflächenseitige Innenwinkel kleiner oder gleich 120°. Auf diese Weise können an der Abschlussfläche ausreichend viele Kanten untergebracht werden, um den Grip und die Nasseigenschaften des Fahrzeugreifens bei heruntergefahrenem Profil möglichst gut zu fördern.

Die mehreckige Abschlussfläche und/oder eine Kontur des Vorsprungs in einer parallel zu der Basisfläche verlaufenden Schnittebene entlang der Höhenerstreckung des Vorsprungs kann leicht gekrümmte Seiten aufweisen, beispielsweise in Form eines Bogenpolygons. Der Innenwinkel bestimmt sich dann anhand zweier Tangenten unmittelbar vor dem Berührungspunkt zweier gekrümmter, den Innenwinkel einschließender Seiten. Vorzugsweise ist die Abschlussfläche polygonförmig, also von geraden Strecken begrenzt. Beispielsweise kann die Abschlussfläche die Form eines Dreiecks, die Form eines Vierecks oder die Form eines Sechsecks annehmen. Hierbei können die Innenwinkel der Abschlussfläche einander, wie im Falle eines gleichseitigen Dreiecks oder Quadrats, auch bei Polygonformen mit mehr als vier Ecken gleichen.

Wenn die Abschlussfläche mehrere abschlussflächenseitige Innenwinkel umfasst, kann sich jeder der abschlussflächenseitigen Innenwinkel entlang jeweils einer Geodäte zu jeweils einem Punkt auf der Grundkontur hin aufweiten. Hierdurch wird der positive Effekt der Aufweitung des ersten abschlussflächenseitigen Innenwinkels vervielfacht. Die weiteren abschlussflächenseitigen Innenwinkel neben dem ersten abschlussflächenseitigen Innenwinkel können einigen oder allen Bedingungen an den ersten abschlussflächenseitigen Innenwinkel und dessen Aufweitung genügen, wie sie vor- und/oder nachstehend beschrieben werden. Die Innenwinkel innerhalb eines Vorsprungs können sich vorzugsweise in identischer Weise aufweiten.

Der erste abschlussflächenseitige Innenwinkel kann sich entlang der Geodäte zu der Grundkontur hin um wenigstens 30%, vorzugsweise um wenigstens 50% aufweiten. Hierdurch wird ein gewisses Grundniveau des erwünschten Effekts erreicht.

Die Grundkontur ist vorzugsweise oval, insbesondere elliptisch, insbesondere kreisförmig. Wenn die Grundkontur keinen Innenwinkel aufweist, kann ein Ersatzwinkel von 180° definiert werden, zu dem hin sich der erste abschlussseitige Innenwinkel aufweiten kann. Im Falle eines Ovals, einer Ellipse oder eines Kreises kann eine Tangente an dem Punkt auf der Grundkontur, an dem die Geodäte mündet, als Flankenpaar eines zu 180° um den Mündungspunkt der Geodäte auf der Grundkontur herum geöffneten Innenwinkels angesehen werden.

Die Geodäte zwischen dem ersten abschlussflächenseitigen Innenwinkel und der Grundkontur kann senkrecht zu der Basisfläche verlaufen. Ein senkrechter Verlauf von Geodäten zwischen abschlussflächenseitigen Innenwinkeln und der Grundkontur kann beispielsweise mit einer ovalen Grundkontur erreicht werden, von der aus eine Mehrzahl von Punkten in Richtung der Basisfläche um die Vorsprungshöhe verschoben und zu einem Polygon verbunden werden. Durch einen möglichst steilen Verlauf der Flanken des Vorsprungs kann eine möglichst große Abschlussfläche erreicht werden. Auf der anderen Seite sollten die Flanken des Vorsprungs keineswegs einen Überhang aufweisen, sollten also mit keiner der Richtungskomponenten ihrer Normalenvektoren von der Basisfläche fortweisen, um die Funktionalität des Vorsprungs als Steinauswerfer zu bewahren.

Die Abschlussfläche kann von wenigstens einem Einschnitt in den Vorsprung unterbrochen werden. Der Einschnitt kann eine Tiefe zwischen 0,25 mm und 2,5 mm, vorzugsweise zwischen 0,5 mm und 2 mm aufweisen. Durch Einschnitte in dem Vorsprung können zusätzliche Kanten geschaffen werden, die bei abgefahrenem Profil mit einem Fahrbahnuntergrund in Kontakt treten können und zusätzlichen Grip sowie verbessertes Nasshandling bewirken können.

Der Fahrzeugreifen und sein Profil können wenigstens zwei in einer Kreuzung verbundene Rillen umfassen. Ein Bereich, in dem zwei oder mehr Rillen einander kreuzen wird als Kreuzung bezeichnet. Auch ein Bereich, in dem zwei oder mehr Rillen ineinander münden, wird als Kreuzung bezeichnet; beispielsweise kann eine Quer- oder Schrägrille über eine T-Kreuzung in eine Umfangsrille münden; beispielsweise können drei Rillen sternförmig aufeinander zulaufen und in einer Y-Kreuzung oder in einer Sternkreuzung ineinander münden. Der Vorsprung kann innerhalb einer langgestreckten Rille oder in einer Kreuzung angeordnet sein. Wenn der Vorsprung in einer Kreuzung angeordnet ist, können sich die Angaben zur Breite des Vorsprungs im Verhältnis zur Breite des Rillengrundes wie bei einer langgestreckten Rille auf den kürzesten Abstand zwischen zwei Rillenflanken beziehen, wobei die zwei Rillenflanken eine Untermenge aller an der Kreuzung beteiligten Rillenflanken sein können. Bei einer Kreuzung mit vier in 90° versetzten Mündungen kann der Vorsprung beispielsweise entlang einer imaginären Verbindungsstrecke zwischen zwei diagonal gegenüberliegenden Profilblöcken angeordnet sein, wobei die Breite des Rillengrundes entlang der imaginären Verbindungsstrecke gemessen würde.

In einer bevorzugten Ausführungsform umfasst der Fahrzeugreifen in seinem Profil mehrere einander in Vollkreuzungen, T-Kreuzungen oder anderen Kreuzungen begegnende Rillen. In einer bevorzugten Ausführungsform umfasst der Fahrzeugreifen in seinem Profil mehrere in den Kreuzungen angeordnete Vorsprünge nach der Art des vor- und oder nachstehend beschriebenen Vorsprungs. In einer Ausführungsform ist ein Vorsprung je Kreuzung zwischen den Rillen des Profils des Fahrzeugreifens angeordnet.

Der Fahrzeugreifen kann auch unabhängig vom Vorliegen einer oder mehrerer Kreuzungen mehrere Vorsprünge umfassen, die den Bedingungen gemäß der vor- und/oder nachstehenden Beschreibung genügen. Die Vorsprünge können einen identischen Aufbau, identische Abmessungen und identische Orientierungen haben oder sich voneinander unterscheiden. Beispielsweise können die Vorsprünge um eine zu ihrer Höhenerstreckung parallele Achse herum verdreht in verschiedenen Orientierungen auf dem Profil angeordnet sein. Die Vorsprünge können beispielsweise alternierend um einen bestimmten Winkel, beispielsweise um 180° verdreht auf dem Profil angeordnet sein, sodass sich bei nicht rotationssymmetrischen Abschlussflächen ein entsprechendes Muster ergibt.

Der Fahrzeugreifen kann ein Negativvolumen von wenigstens 15% aufweisen. Dieser Wert errechnet sich über den Quotienten aus dem Gesamtnegativvolumen und dem Gesamtvolumen zwischen der Basisfläche und einer Grundfläche. Die Grundfläche hat entlang der Umfangsrichtung einen gleichbleibenden Verlauf. In axialen Bereichen zwischen zwei Umfangsrillen verläuft die Grundfläche auf dem Niveau des Rillengrundes der Umfangsrillen. In Bereichen zwischen einer Umfangsrille und einer Reifenschulter verläuft die Grundfläche je Punkt entlang der Querrichtung auf dem Niveau des Rillengrundes einer in Umfangsrichtung gemessen tiefsten Quer- oder Schrägrille. Die erfindungsgemäßen Vorsprünge entfalten ihre Wirkung als Steinauswerfer sowie als Mittel zur Erhöhung des Grips und Nasshandlings bei heruntergefahrenem Profil insbesondere in Fahrzeugreifen mit hohem Negativvolumen, wie sie beispielsweise im Offroad-Bereich oder bei Baumaschinen zum Einsatz kommen.

Die Erfindung wird nachfolgend unter Bezugnahme auf die beigefügten Zeichnungen anhand vorteilhafter Ausführungsformen beispielhaft beschrieben. Es zeigen:
Figur 1a schematisch eine Draufsicht auf eine Profilrille mit einem Vorsprung gemäß einer ersten Ausführungsform der Erfindung,
Figur 1b schematisch eine Schnittansicht entlang der Linie Ib-Ib aus Figur 1a,
Figur 2a eine seitliche Ansicht eines Vorsprungs gemäß einer ersten Ausführungsform der Erfindung,
Figur 2b eine perspektivische Ansicht eines Vorsprungs gemäß einer ersten Ausführungsform der Erfindung,
Figur 2c eine Draufsicht auf einen Vorsprung gemäß einer ersten Ausführungsform der Erfindung,
Figur 2d eine Schnittansicht entlang der in Figur 2a angedeuteten Schnittebene IId,
Figur 3a verschiedene Ansichten eines Vorsprungs gemäß einer zweiten Ausführungsform der Erfindung,
Figur 3b verschiedene Ansichten eines Vorsprungs gemäß einer dritten Ausführungsform der Erfindung,
Figur 4a verschiedene Ansichten eines Vorsprungs gemäß einer vierten Ausführungsform der Erfindung,
Figur 4b verschiedene Ansichten eines Vorsprungs gemäß einer fünften Ausführungsform der Erfindung,
Figur 4c verschiedene Ansichten eines Vorsprungs gemäß einer sechsten Ausführungsform der Erfindung,
Figur 5 eine Draufsicht auf ein Profil mit Vorsprüngen gemäß einer weiteren Ausführungsform der Erfindung,
Figur 6 eine Draufsicht auf ein Profil mit Vorsprüngen gemäß einer alternativen weiteren Ausführungsform der Erfindung.

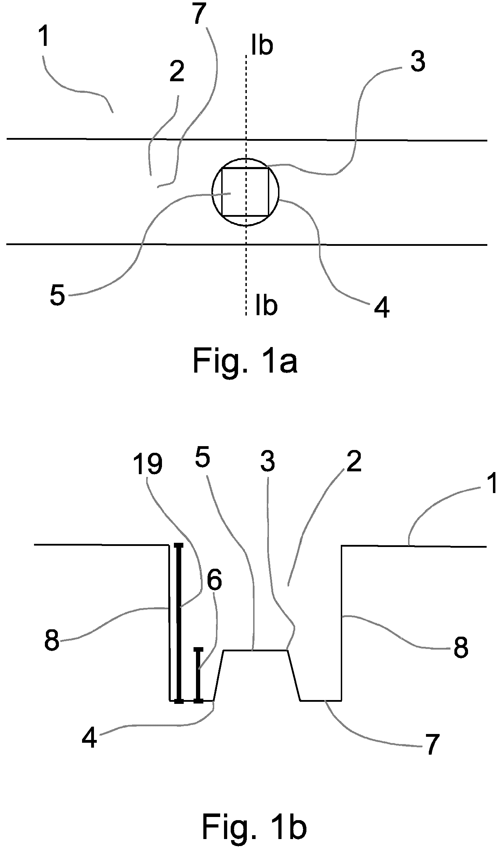

In Figur 1a sind durch zwei quer in der Zeichnungsebene verlaufende Linien die Ränder einer Profilrille 2 angedeutet, wobei die Profilrille 2 unter einer darum herum verlaufenden Basisfläche 1 eines Fahrzeugreifens in das Innere des Fahrzeugreifens - und in Figur 1a in Richtung der Zeichnungsebene - zurückversetzt ist. In der Profilrille 2 ist ein Vorsprung 3 mit einer kreisförmigen, auf dem Rillengrund 7 verlaufenden Grundkontur 4 ausgebildet, der sich radial nach außen - in Figur 1a aus der Zeichnungsebene heraus - bis zu einer quadratischen Abschlussfläche 5 über der Grundkontur 4 erhebt. Die Grundkontur 4 erstreckt sich über eine Breite von etwa 50% der Rillenbreite, sodass zu beiden Seiten des Vorsprungs 3 noch ein Freiraum am Rillengrund 7 verbleibt, durch den Wasser durch die Profilrille 2 abgeführt werden kann. Durch die kreisförmige Grundkontur 4 werden Spannungsspitzen am Übergang zwischen dem Vorsprung 3 und dem Rillengrund 7 begrenzt, wodurch eine Rissanfälligkeit klein gehalten werden kann.

Figur 1b zeigt einen Schnitt entlang der Linie Ib-Ib aus Figur 1a. Die Profilrille 2 hat in der gezeigten einfachen Ausführungsform einen rechteckigen Querschnitt mit einem Rillengrund 7 und zwei Rillenflanken 8. Der Vorsprung 3 verjüngt sich in dem gezeigten Querschnitt von der Grundkontur 4 zu der Abschlussfläche 5 hin. Die sich zwischen der Grundkontur 4 an dem Rillengrund 7 und der Abschlussfläche erstreckende Vorsprungshöhe 6 liegt bei etwa 30% der zwischen dem Rillengrund 7 und der Basisfläche 1 gemessenen Rillentiefe 19. Der gezeigte Querschnitt entspricht einem unbenutzten Zustand des Fahrzeugreifens mit einem noch nicht abgefahrenem Profil. Nachdem das Profil an der Basisfläche 1 zu beiden Seiten der Profilrille 2 zunehmend abgefahren wurde, kann ab einem bestimmten Punkt der Vorsprung 3 in Kontakt mit einem Fahrbahnuntergrund treten. Hierbei können die scharfen Kanten des Vorsprungs 3 an dessen Abschlussfläche 5 für zusätzlichen Grip und gute Nasseigenschaften des Fahrzeugreifens sorgen.

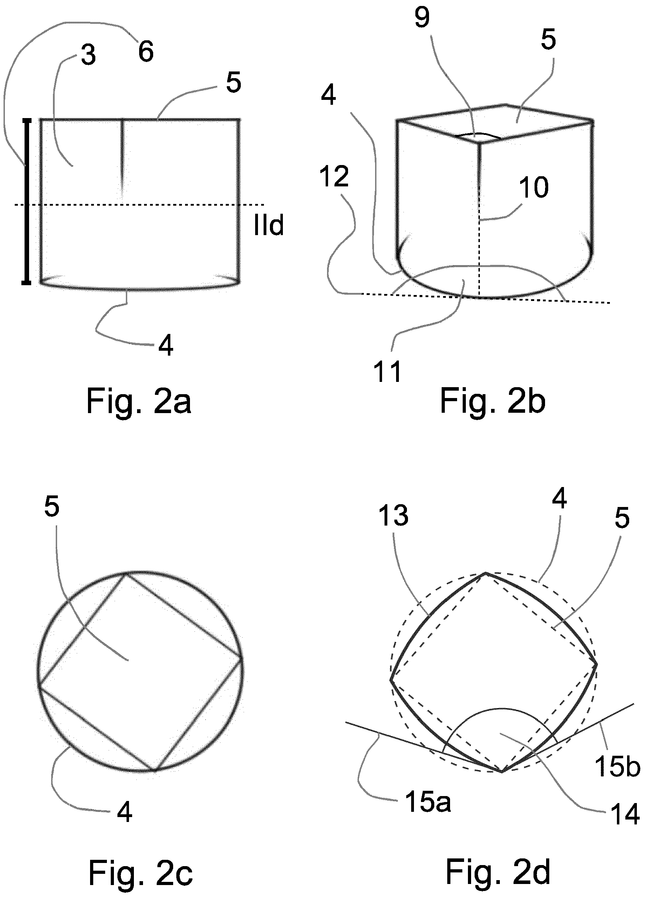

Figuren 2a bis 2d zeigen verschiedene Einzelansichten des Vorsprungs 3 aus den Figuren 1a und 1b, wobei der Vorsprung 3 der Einfachheit halber für sich genommen und ohne den Hintergrund der Profilrille 2 betrachtet wird. Wie aus der perspektivischen Ansicht gemäß Figur 2b und aus der Draufsicht gemäß Figur 2c ersichtlich, ist die Abschlussfläche 5 quadratisch, während die Grundkontur 4 kreisförmig ausgebildet ist. Eine Geodäte 10 von einem ersten abschlussflächenseitigen Innenwinkel 9 zu der Grundkontur 4 ist in Figur 2b als gestrichelte Linie dargestellt. Am Schnittpunkt der Geodäte 10 mit der Grundkontur 4 ist eine Tangente 12 an die Grundkontur 4 als gestrichelte Linie dargestellt. Der Innenwinkel weitet sich entlang der Geodäte von 90° an der Abschlussfläche 5 zu einem an der Tangente 12 bei der Grundkontur 4 definierten Ersatzwinkel 11 von 180° auf; dementsprechend weitet sich der erste abschlussflächenseitige Innenwinkel 9 von der Abschlussfläche 5 zu der Grundkontur 4 hin um 100% auf. Die drei weiteren abschlussflächenseitigen Innenwinkel der Abschlussfläche 5 weiten sich in der gleichen Weise wie der erste abschlussflächenseitige Innenwinkel 9 auf. Wie aus den Figuren 2a und 2c ersichtlich, verlaufen die Geodäten 10 zwischen den vier Eckpunkten der Abschlussfläche 5 und der Grundkontur 4 senkrecht zu der Abschlussfläche 5, die wiederum parallel zu der in den Figuren 2a bis 2c nicht gezeigten Basisfläche 1 des Fahrzeugreifens verläuft. Hierdurch kann die Abschlussfläche 5 trotz der sich nach unten hin aufweitenden - und sich andersherum nach oben hin verengenden - Innenwinkel für einen Kontakt mit einem Fahrbahnuntergrund möglichst groß gehalten werden.

Der Übergang zwischen der Abschlussfläche 5 und der Grundkontur 4 kann fließend erfolgen, wie in Figur 2b angedeutet ist. In Figur 2d ist eine Schnittkontur 13 des Vorsprungs 3 in der in Figur 2a als gestrichelte Linie angedeuteten Ebene IId gezeigt, wobei die Ebene IId parallel zu der Abschlussfläche 5 und parallel zu der Basisfläche 1 des Fahrzeugreifens auf halber Vorsprungshöhe 6 durch den Vorsprung 3 verläuft. Gemäß Figur 2d verläuft die Schnittkontur 13 des Vorsprungs 3 in der Ebene IId zwischen der Kontur 5 der Abschlussfläche und der Grundkontur 4, die in Figur 2d beide zum Vergleich als gestrichelte Linien dargestellt sind. Ein Innenwinkel 14 an einem Eckpunkt der Schnittkontur 13 ergibt sich zwischen zwei Tangenten 15a, 15b, die kurz vor dem Eckpunkt zu zwei Seiten an der Schnittkontur 13 anliegen, wie in Figur 2d anhand gewinkelter Linien angedeutet. Der Innenwinkel 14 in der Schnittkontur 13 liegt in seiner Größe zwischen dem ersten abschlussflächenseitigen Innenwinkel 9 und dem Ersatzwinkel 11 an der Grundkontur.

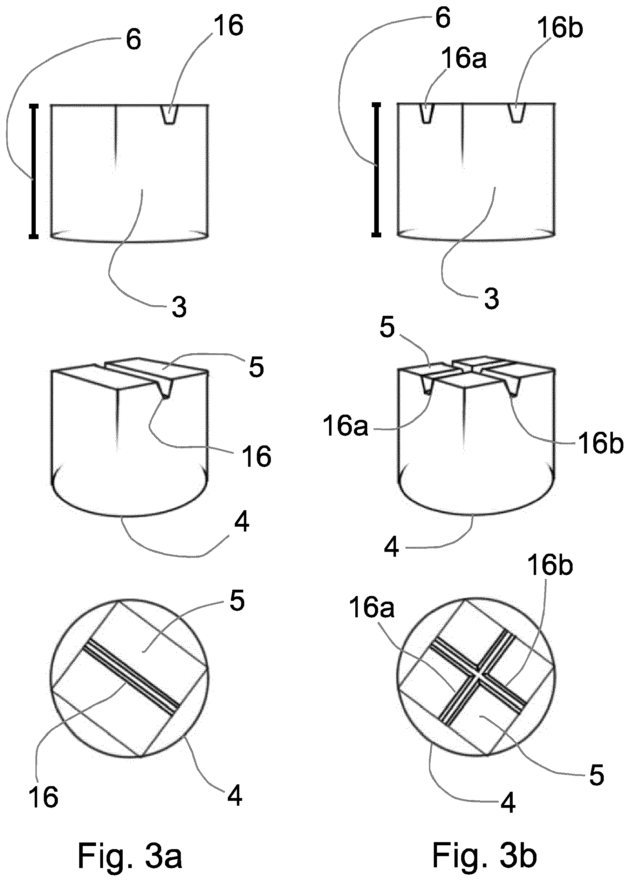

Die Figuren 3a und 3b zeigen eine zweite bzw. eine dritte Ausführungsform eines erfindungsgemäßen Vorsprungs 3 in Seitenansicht (obere Bildzeile), perspektivischer Ansicht (mittlere Bildzeile) und Draufsicht (untere Bildzeile). Gemäß Figur 3a ist ein Einschnitt 16 in dem Vorsprung 3 ausgebildet. Der Einschnitt 16 erstreckt sich über die gesamte Breite der Abschlussfläche 5 und über einen Teilbereich der Vorsprungshöhe 6. Gemäß Figur 3b sind zwei einander kreuzend Einschnitte 16a, 16b in dem Vorsprung 3 ausgebildet. Durch die Einschnitte 16a, 16b werden zusätzliche Kanten geschaffen, die den Grip und die Nasseigenschaften des Fahrzeugreifens bei heruntergefahrenem Profil zusätzlich verbessern können.

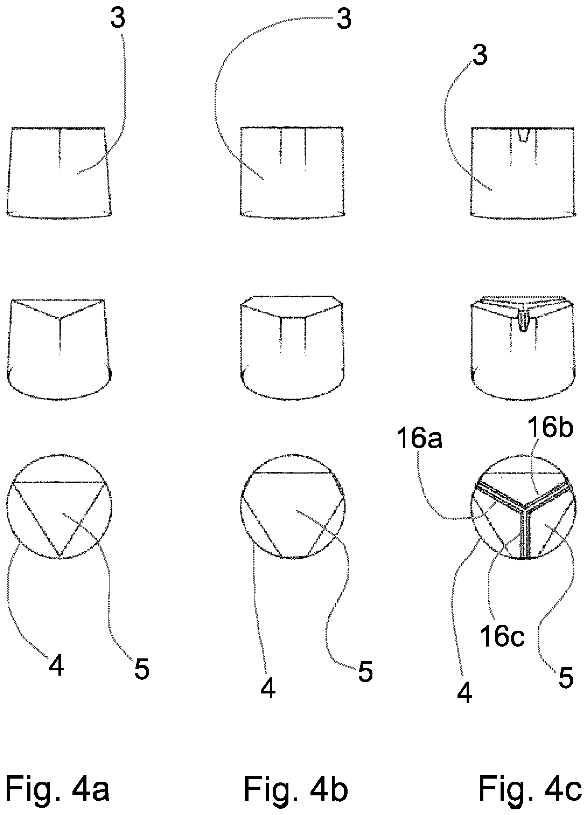

Die Figuren 4a bis 4c zeigen eine vierte bis sechste Ausführungsform eines erfindungsgemäßen Vorsprungs 3 in Seitenansicht (obere Bildzeile), perspektivischer Ansicht (mittlere Bildzeile) und Draufsicht (untere Bildzeile). Gemäß Figur 4a nimmt die Abschlussfläche 5 die Form eines gleichseitigen Dreiecks an, wobei die Grundkontur 4 kreisförmig ausgebildet ist. Gemäß Figur 4b nimmt die Abschlussfläche 5 die Form eines Sechsecks mit einander abwechselnden kürzeren und längeren Seiten an, wobei die Grundkontur 4 kreisförmig ausgebildet ist. Gemäß Figur 4c nimmt die Abschlussfläche 5 die Form eines Sechsecks wie in Figur 4b an, wobei die Grundkontur 4 kreisförmig ausgebildet ist; von den drei kürzeren Seiten des Sechsecks aus erstreckt sich je ein Einschnitt 16a, 16b, 16c zur Mitte der Abschlussfläche 5 hin, wo sich die drei Einschnitte 16a, 16b, 16c vereinen.

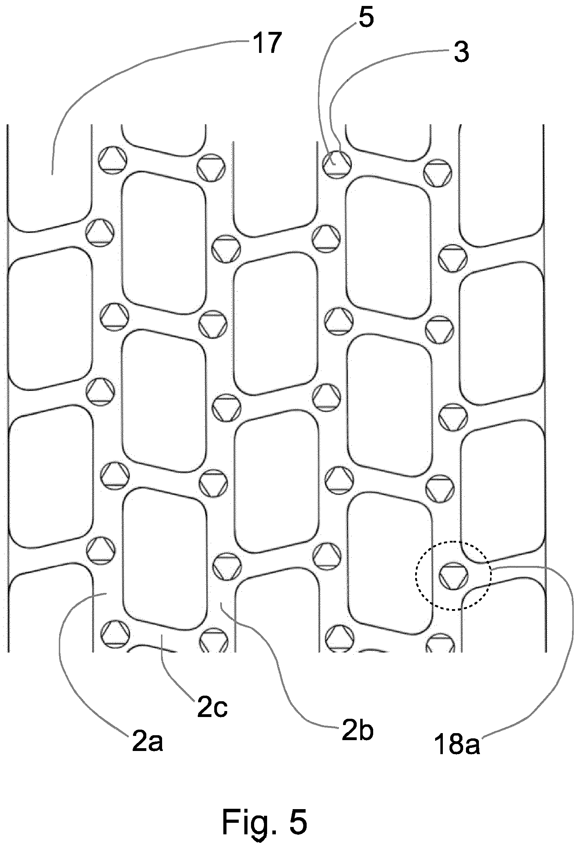

Figur 5 zeigt eine Draufsicht auf ein Profil eines Fahrzeugreifens mit Umfangsrillen 2a, 2b und Querrillen 2c, die einander in Kreuzungen, insbesondere in T-Kreuzungen 18 begegnen und in den Zwischenräumen Profilböcke 17 definieren. In jeder T-Kreuzung 18a ist ein Vorsprung 3 gemäß der in Figur 4b gezeigten vierten Ausführungsform angeordnet. Bei der in der Zeichnung als linke, äußere Umfangsrille 2a dargestellten Rille weist jeweils eine kürzere Seite der sechseckigen Abschlussfläche 5 in der Zeichnung nach oben; in der dazu benachbarten Umfangsrille 2b zeigt jeweils eine kürzere Seite der sechseckigen Abschlussfläche 5 in der Zeichnung nach unten; auf diese Weise entsteht ein zwischen den Umfangsrillen 2a, 2b alternierendes Muster. Durch das beschriebene Muster in der Ausrichtung der Vorsprünge 3 kann im Zusammenhang mit dem Muster der - zu alternierenden Orientierungen hin - leicht geneigten Querrillen 2c eine vorteilhafte Strömung durch das Netz der Profilrillen 2a, 2b, 2c in dem dargestellten Profil erreicht werden.

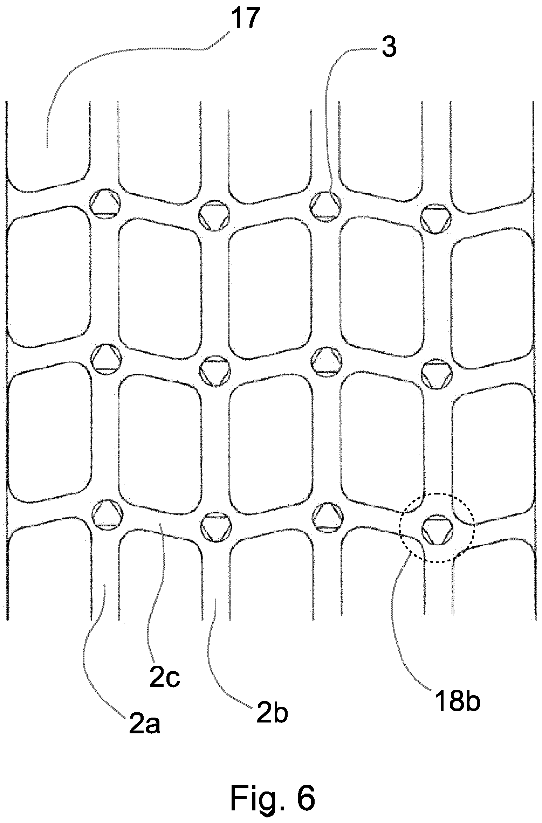

Figur 6 zeigt eine Draufsicht auf ein alternatives Profil eines Fahrzeugreifens mit Umfangsrillen 2a, 2b und Querrillen 2c, die einander in Kreuzungen 18b begegnen und in den Zwischenräumen Profilböcke 17 definieren. In jeder Kreuzung 18b ist ein Vorsprung 3 gemäß der in Figur 4b gezeigten vierten Ausführungsform angeordnet. Die Vorsprünge alternieren in ihrer Orientierung nach dem gleichen Muster wie anhand von Figur 5 beschrieben.

### Bezugszeichenliste

- 1: Basisfläche
- 2: Rille
- 2a: Umfangsrille (äußere)
- 2b: Umfangsrille (der äußeren benachbarte)
- 2c: Querrille
- 3: Vorsprung
- 4: Grundkontur
- 6: Vorsprungshöhe
- 7: Rillengrund
- 8: Rillenflanke
- 9: erster abschlussflächenseitiger Innenwinkel
- 10: Geodäte
- 11: Ersatzwinkel
- 12: Tangente
- 13: Schnittkontur
- 14: Innenwinkel (an einem Eckpunkt der Schnittkontur)
- 15a: Tangente (an kurz vor Eckpunkt gelegener Position)
- 15b: Tangente (an kurz vor Eckpunkt gelegener Position)
- 16: Einschnitt
- 16a: Einschnitt (erster)
- 16b: Einschnitt (zweiter)
- 16c: Einschnitt (dritter)
- 17: Profilblock
- 18a: Kreuzung (T-Kreuzung)
- 18b: Kreuzung
- 19: Rillentiefe

## Patentansprüche

1. Fahrzeugreifen mit einem Profil, umfassend eine Basisfläche (1) und eine gegenüber der Basisfläche (1) um eine Rillentiefe (19) zurückversetzte Profilrille (2) mit zwei Rillenflanken (8) und einem sich zwischen den Rillenflanken (8) erstreckenden Rillengrund (7), wobei sich von einer auf dem Rillengrund (7) gelegenen Grundkontur (4) ausgehend wenigstens ein Vorsprung (3) um eine Vorsprungshöhe (6) bis zu einer Abschlussfläche (5) erstreckt, wobei die Vorsprungshöhe (6) kleiner ist als die Rillentiefe (19) und wobei die Grundkontur (5) schmaler ist als der Rillengrund (7), wobei die Abschlussfläche (5) im Wesentlichen parallel zu der Basisfläche (1) verläuft, wobei die Abschlussfläche (5) mehreckig ist und einen ersten abschlussflächenseitigen Innenwinkel (9) umfasst, wobei sich der erste abschlussflächenseitige Innenwinkel (9) entlang einer Geodäte (10) zu der Grundkontur (4) hin aufweitet, wobei die Geodäte (10) zwischen dem ersten
abschlussflächenseitigen Innenwinkel (9) und der Grundkontur (4) des Vorsprungs (3) die kürzeste auf einer Oberfläche des Vorsprungs (3) verlaufende Verbindung zwischen dem Berührungspunkt zweier Seiten der Abschlussfläche (5) in dem ersten abschlussflächenseitigen Innenwinkel (9) und der Grundkontur (4) ist,
**dadurch gekennzeichnet,**
**dass** die Grundkontur (4) eine gerundete Form ohne Innenwinkel aufweist.

2. Fahrzeugreifen gemäß Anspruch 1, **dadurch gekennzeichnet, dass** ein Flächeninhalt der Abschlussfläche (5) wenigstens 30%, vorzugsweise wenigstens 50%, weiter vorzugsweise wenigstens 70% eines von der Grundkontur (4) eingeschlossenen Flächeninhalts beträgt.

3. Fahrzeugreifen gemäß einem der Ansprüche 1 oder 2, **dadurch gekennzeichnet, dass** die Vorsprungshöhe (6) zwischen 5% und 50%, vorzugsweise zwischen 10% und 30% der Rillentiefe (19) beträgt.

4. Fahrzeugreifen gemäß einem der Ansprüche 1 bis 3, **dadurch gekennzeichnet, dass** die Grundkontur (4) sich über 20% bis 80%, vorzugsweise über 40% bis 70% einer Breite des Rillengrundes (7) erstreckt.

5. Fahrzeugreifen gemäß einem der Ansprüche 1 bis 4, **dadurch gekennzeichnet, dass** der erste abschlussflächenseitige Innenwinkel (9) kleiner oder gleich 120° ist.

6. Fahrzeugreifen gemäß einem der Ansprüche 1 bis 5, **dadurch gekennzeichnet, dass** das die Abschlussfläche (5) polygonförmig ist.

7. Fahrzeugreifen gemäß einem der Ansprüche 1 bis 6, **dadurch gekennzeichnet, dass** die Abschlussfläche (5) mehrere abschlussflächenseitige Innenwinkel (9) umfasst, wobei sich jeder der abschlussflächenseitigen Innenwinkel (9) entlang jeweils einer Geodäte (10) zu jeweils einem Punkt auf der Grundkontur (4) hin aufweitet.

8. Fahrzeugreifen gemäß einem der Ansprüche 1 bis 7, **dadurch gekennzeichnet, dass** sich der erste abschlussflächenseitige Innenwinkel (9) entlang der Geodäte (10) zu der Grundkontur hin um wenigstens 30%, vorzugsweise um wenigstens 50% aufweitet.

9. Fahrzeugreifen gemäß einem der Ansprüche 1 bis 8, **dadurch gekennzeichnet, dass** die Grundkontur (4) vorzugsweise oval, insbesondere elliptisch, insbesondere kreisförmig ist.

10. Fahrzeugreifen gemäß einem der Ansprüche 1 bis 9, **dadurch gekennzeichnet, dass** die Geodäte (10) zwischen dem ersten abschlussflächenseitigen Innenwinkel (9) und der Grundkontur (4) senkrecht zu der Basisfläche (1) verläuft.

11. Fahrzeugreifen gemäß einem der Ansprüche 1 bis 10, **dadurch gekennzeichnet, dass** die Abschlussfläche (5) von wenigstens einem Einschnitt (16) in den Vorsprung (3) unterbrochen wird.

12. Fahrzeugreifen gemäß Anspruch 11, **dadurch gekennzeichnet, dass** der Einschnitt (16) eine Tiefe zwischen 0,25 mm und 2,5 mm, vorzugsweise zwischen 0,5 mm und 2 mm aufweist.

13. Fahrzeugreifen gemäß einem der Ansprüche 1 bis 12, **dadurch**
**gekennzeichnet, dass** das Profil des Fahrzeugreifens wenigstens zwei in einer Kreuzung (18a, 18b) verbundene Rillen (2, 2a, 2b, 2c) umfasst, wobei der Vorsprung (3) in der Kreuzung (18a, 18b) angeordnet ist.

14. Fahrzeugreifen gemäß einem der Ansprüche 1 bis 13, **dadurch**
**gekennzeichnet, dass** der Fahrzeugreifen ein Negativvolumen von wenigstens 15% aufweist.

15. Fahrzeugreifen gemäß einem der Ansprüche 1 bis 14, **dadurch**
**gekennzeichnet, dass** der Fahrzeugreifen mehrere Vorsprünge (3) umfasst, wobei die Vorsprünge (3) den Bedingungen aus einem oder mehreren der vorstehenden Ansprüche genügen.

## Claims

1. Vehicle tyre with a profile comprising a base surface (1) and a profile groove (2), which has two groove flanks (8) and is recessed relative to the base surface (1) by a groove depth (19), and a groove base (7) extending between the groove flanks (8), wherein, proceeding from a base contour (4) located on the groove base (7), at least one protrusion (3) extends by a protrusion height (6) to a terminating surface (5), wherein the protrusion height (6) is smaller than the groove depth (19), and wherein the base contour (5) is narrower than the groove base (7), wherein the terminating surface (5) extends substantially parallel to the base surface (1), wherein the terminating surface (5) is polygonal and comprises a first internal angle (9) proximal to the terminating surface, wherein the first internal angle (9) proximal to the terminating surface widens along a geodesic (10) to the base contour (4), wherein the geodesic (10) between the first
internal angle (9) proximal to the terminating surface and the base contour (4) of the protrusion (3) is the shortest connection between the contact point of two sides of the terminating surface (5) in the first internal angle (9) proximal to the terminating surface and the base contour (4) extending on a surface of the protrusion (3),
**characterized in that**
the base contour (4) has a rounded shape without an internal angle.

2. Vehicle tyre according to Claim 1, **characterized in that** an area of the terminating surface (5) is at least 30%, preferably at least 50%, more preferably at least 70%, of an area of a surface enclosed by the base contour (4).

3. Vehicle tyre according to either of Claims 1 and 2, **characterized in that** the protrusion height (6) is between 5% and 50%, preferably between 10% and 30%, of the groove depth (19).

4. Vehicle tyre according to one of Claims 1 to 3, **characterized in that** the base contour (4) extends over 20% to 80%, preferably over 40% to 70%, of a width of the groove base (7).

5. Vehicle tyre according to one of Claims 1 to 4, **characterized in that** the first internal angle (9) proximal to the terminating surface is less than or equal to 120°.

6. Vehicle tyre according to one of Claims 1 to 5, **characterized in that** the terminating surface (5) is polygonal.

7. Vehicle tyre according to one of Claims 1 to 6, **characterized in that** the terminating surface (5) comprises a plurality of internal angles (9) proximal to the terminating surface, wherein each of the internal angles (9) proximal to the terminating surface widens in each case along a geodesic (10) to a respective point on the base contour (4).

8. Vehicle tyre according to one of Claims 1 to 7, **characterized in that** the first internal angle (9) proximal to the terminating surface widens by at least 30%, preferably by at least 50%, along the geodesic (10) to the base contour.

9. Vehicle tyre according to one of Claims 1 to 8, **characterized in that** the base contour (4) is preferably oval, in particular elliptical, in particular circular.

10. Vehicle tyre according to one of Claims 1 to 9, **characterized in that** the geodesic (10) between the first internal angle (9) proximal to the terminating surface and the base contour (4) is perpendicular to the base surface (1).

11. Vehicle tyre according to one of Claims 1 to 10, **characterized in that** the terminating surface (5) is interrupted by at least one incision (16) in the protrusion (3).

12. Vehicle tyre according to Claim 11, **characterized in that** the incision (16) has a depth between 0.25 mm and 2.5 mm, preferably between 0.5 mm and 2 mm.

13. Vehicle tyre according to one of Claims 1 to 12, **characterized in that** the profile of the vehicle tyre comprises at least two grooves (2, 2a, 2b, 2c) connected in an intersection (18a, 18b), wherein the protrusion (3) is disposed in the intersection (18a, 18b).

14. Vehicle tyre according to one of Claims 1 to 13, **characterized in that** the vehicle tyre has a negative volume of at least 15%.

15. Vehicle tyre according to one of Claims 1 to 14, **characterized in that** the vehicle tyre comprises several protrusions (3), wherein the protrusions (3) satisfy the conditions of one or more of the preceding claims.

## Revendications

1. Pneu de véhicule avec un profil, comprenant une surface de base (1) et une rainure (2) de profil en retrait autour d'une profondeur (19) de rainure par rapport à la surface de base (1) avec deux flancs (8) de rainure et un fond (7) de rainure s'étendant entre les flancs (8) de rainure, au moins une saillie (3) s'étendant en partant d'un contour (4) de fond placé sur le fond (7) de rainure d'une hauteur (6) de saillie jusqu'à une surface de terminaison (5), la hauteur (6) de saillie étant inférieure à la profondeur (19) de rainure et le contour (5) de fond étant plus étroit que le fond (7) de rainure, la surface de terminaison (5) s'étendant sensiblement parallèlement à la surface de base (1), la surface de terminaison (5) étant polygonale et comprenant un premier angle intérieur (9) côté surface de terminaison, le premier angle intérieur (9) côté surface de terminaison s'élargissant le long d'une géodésique (10) en direction du contour (4) de fond , la géodésique (10) entre le premier
angle intérieur (9) côté surface de terminaison et le contour (4) de fond de la saillie (3) étant la liaison la plus courte s'étendant sur une surface de la saillie (3) entre le point de contact de deux côtés de la surface de terminaison (5) dans le premier angle intérieur (9) côté surface de terminaison et le contour (4) de fond,
**caractérisé en ce**
**que** le contour (4) de fond présente une forme arrondie sans angle intérieur.

2. Pneu de véhicule selon la revendication 1, **caractérisé en ce qu'**une superficie de la surface de terminaison (5) est d'au moins 30 %, de préférence d'au moins 50 %, de préférence encore d'au moins 70 % d'une superficie incluse par le contour (4) de fond.

3. Pneu de véhicule selon l'une des revendications 1 ou 2, **caractérisé en ce que** la hauteur (6) de saillie est comprise entre 5 % et 50 %, de préférence entre 10 % et 30 % de la profondeur (19) de rainure.

4. Pneu de véhicule selon l'une des revendications 1 à 3, **caractérisé en ce que** le contour (4) de fond s'étend sur 20 % à 80 %, de préférence sur 40 % à 70 % d'une largeur du fond (7) de rainure.

5. Pneu de véhicule selon l'une des revendications 1 à 4, **caractérisé en ce que** le premier angle intérieur (9) côté surface de terminaison est inférieur ou égal à 120°.

6. Pneu de véhicule selon l'une des revendications 1 à 5, **caractérisé en ce que** la surface de terminaison (5) est de forme polygonale.

7. Pneu de véhicule selon l'une des revendications 1 à 6, **caractérisé en ce que** la surface de terminaison (5) comprend plusieurs angles intérieurs (9) côté surface de terminaison, chacun des angles intérieurs (9) côté surface de terminaison s'élargissant le long d'une géodésique respective (10) vers un point respectif sur le contour (4) de fond.

8. Pneu de véhicule selon l'une des revendications 1 à 7, **caractérisé en ce que** le premier angle intérieur (9) côté surface de terminaison s'élargit le long de la géodésique (10) vers le contour de fond d'au moins 30 %, de préférence d'au moins 50 %.

9. Pneu de véhicule selon l'une des revendications 1 à 8, **caractérisé en ce que** le contour (4) de fond est de préférence ovale, en particulier elliptique, en particulier circulaire.

10. Pneu de véhicule selon l'une des revendications 1 à 9, **caractérisé en ce que** la géodésique (10) entre le premier angle intérieur (9) côté surface de terminaison et le contour (4) de fond s'étend perpendiculairement à la surface de base (1).

11. Pneu de véhicule selon l'une des revendications 1 à 10, **caractérisé en ce que** la surface de terminaison (5) est interrompue par au moins une entaille (16) dans la saillie (3).

12. Pneu de véhicule selon la revendication 11, **caractérisé en ce que** l'entaille (16) présente une profondeur entre 0,25 mm et 2,5 mm, de préférence entre 0,5 mm et 2 mm.

13. Pneu de véhicule selon l'une des revendications 1 à 12, **caractérisé en ce que** le profil du pneu de véhicule comprend au moins deux rainures (2, 2a, 2b, 2c) reliées en une intersection (18a, 18b), la saillie (3) étant disposée dans l'intersection (18a, 18b).

14. Pneu de véhicule selon l'une des revendications 1 à 13, **caractérisé en ce que** le pneu de véhicule présente un volume négatif d'au plus 15 %.

15. Pneu de véhicule selon l'une des revendications 1 à 14, **caractérisé en ce que** le pneu de véhicule comprend plusieurs saillies (3), les saillies (3) répondant aux conditions issues d'une ou de plusieurs des revendications précédentes.
